# EUROPÄISCHE PATENTSCHRIFT

(11) **EP 2 193 899 B1**
(45) Veröffentlichungstag und Bekanntmachung des Hinweises auf die Patenterteilung: **11.10.2017**
(21) Anmeldenummer: 08021161.8
(22) Anmeldetag: 05.12.2008
(51) Int. Cl.: B27N 3/04, B27N 1/02, C08L 97/02, C08H 8/00

(54) **Verfahren zur Herstellung von Holzwerkstoffen aus Lignocellulose-haltigen Zerkleinerungsprodukten und solche Holzwerkstoffe**
Method for manufacturing wooden materials made of hackled products containing lignocellulose and such wooden materials
Procédé de fabrication de matières dérivées du bois à partir de lignocellulose contenant des produits de broyage et une telle matière dérivée du bois

(43) Veröffentlichungstag der Anmeldung: 09.06.2010
(60) Teilanmeldung: 13173339.6
(73) Patentinhaber: SWISS KRONO Tec AG, 6004 Luzern (CH)
(72) Erfinder: Grunwald, Dirk, Dr., 38108 Braunschweig (DE); Kalwa, Norbert, Dr., 32805 Horn-Bad Meinberg (DE)
(74) Vertreter: Kröncke, Rolf

(56) Entgegenhaltungen:
- EP-A- 1 900 788
- EP-A2- 2 111 959
- WO-A-98/33970
- WO-A-98/37147
- WO-A-2006/042651
- WO-A-2007/000418
- WO-A-2007/012350
- DE-A1- 2 410 746
- DE-A1- 19 810 688
- DE-A1- 19 957 329
- DE-A1-102004 024 509
- Anonymous: "Calcium oxide | 1305-78-8", , 30 March 2016 (2016-03-30), XP055261406, Retrieved from the Internet: URL:http://www.chemicalbook.com/ChemicalPr oductProperty_EN_CB2853017.htm [retrieved on 2016-03-30]

## Beschreibung

Die Erfindung betrifft die Verwendung von Additiven in Verfahren zur Herstellung von Holzwerkstoffen aus Lignocellulose-haltigen Zerkleinerungsprodukten, bei denen die Emission von flüchtigen organischen Verbindungen (volatile organic compounds (VOC)) vermindert sind, gemäß Anspruch 1. Insbesondere betrifft die vorliegende Erfindung die Verwendung in einem Verfahren zur Herstellung von Holzwerkstoffen, bei dem den Zerkleinerungsprodukten vor dem Verpressen sowohl ein Oxidationsmittel als auch ein Reduktionsmittel im zeitlichen Abstand, als Additive hinzugefügt wird.

Des Weiteren richtet sich die vorliegende Beschreibung auf unter Verwendung dieser Additive und solchen Verfahren herstellbare Holzwerkstoffe, insbesondere OSB-Platten und MDF-Platten. Mit Hilfe dieser Verwendung kann die Emission von VOC sowohl während des Herstellungsverfahrens als auch während der späteren Nutzung der Holzwerkstoffe verringert werden. Die Verringerung betrifft sowohl die Emission von Aldehyden aber insbesondere auch die Verringerung der Emission von Terpenen.

### Stand der Technik

Ein gravierendes Problem bei der Nutzung von Holzwerkstoffen, insbesondere unter dem Aspekt der zunehmenden Nutzung von holzhaltigen Produkten in Innenräumen, stellt die Emission von flüchtigen organischen Verbindungen (volatile organic compounds VOC) bei Gebrauch dar. Unter den flüchtigen organischen Verbindungen fallen insbesondere solche organischen Stoffe, deren Retentionszeit im Gaschromatogramm zwischen C6 (Hexan) und C16 (Hexadecan) liegen. Hierunter befinden sich unter anderem gesättigte und ungesättigte Aldehyde aber auch organische Säuren, Alkohole, Carbonsäuren, aliphatische und aromatische Kohlenwasserstoffe, wie Terpene, und viele mehr. Es wurden bereits verschiedenste Ansätze und Vorschläge gemacht, die Emission dieser flüchtigen organischen Verbindungen zu reduzieren. So wurde bereits der Einsatz verschiedener Reduktionsmittel, wie Sulfite oder Bisulfite, zur Reduktion der Aldehydemission vorgeschlagen, siehe zum Beispiel
WO 2007/012350 A1. Allerdings richten sich die meisten Verfahren ausschließlich auf die Verminderung der Emission von ungesättigten und gesättigten Aldehyden als Teil der flüchtigen organischen Verbindungen. Teilweise erlauben diese Stoffe auch die Verringerung der Emission von Säuren, siehe z.B. EP1900788A1. Neben den genannten Stoffen stellen aber auch die Gruppe der Terpene eine sehr relevante Verbindungsklasse von flüchtigen organischen Verbindungen dar. Hierfür gibt es bisher keine geeigneten Verfahren, deren Emission zu vermindern.

Flüchtige organische Verbindungen ebenso wie sehr flüchtige organische Verbindungen, zu denen unter anderem Ameisensäure und Formaldehyd gezählt werden, können in Abhängigkeit von der Art und dem Zustand der Lignocellulosen, wie Holzart, der Lagerungsdauer, den Lagerungsbedingungen des Holzes beziehungsweise der Zerkleinerungsprodukte der Lignocellulosen, in unterschiedlichen chemischen Zusammensetzungen und Mengen vorkommen. Üblicherweise entstammen die VOCs dabei den Extraktstoffen der Prominente Vertreter hiervon sind Terpene, wie alpha-Pinen, beta-Pinen oder delta-3-Caren. Solche Bestandteile finden sich vor allem im Holz der Nadelbäume wieder. Aber auch Aldehyde, wie Pentanal oder andere höhere Aldehyde oder höhere Carbonsäuren werden holzbedingt freigesetzt. Diese Abbauprodukte entstehen u. a. durch langandauernde Oxidationsprozesse von Holzinhaltsstoffen, wie Fettsäuren, aber auch Lignin, Cellulose und Hemicellulose. Das heißt vor allem bei aus Nadelhölzer hergestellten Holzwerkstoffen, wie mitteldichte Faserplatten (MDF) oder OSB-Platten, die große Mengen an Harz und Fetten enthalten, ist eine starke Emission von leicht flüchtigen organischen Verbindungen einschließlich Terpenen zu beobachten.

Aber auch durch die Verwendung bestimmter Klebstoffe für die Herstellung der Holzwerkstoffe können VOCs einschließlich Aldehyde entstehen. Dieses seit langem bekannte Problem der Emission von VOCs konnte im Stand der Technik aber bisher nicht gelöst werden. Obwohl verschiedene Lösungsvorschläge zur Minderung der Emission von ungesättigten und gesättigten Aldehyden und zum Teil der Minderung der Emissionen von Säuren vorgeschlagen wurde, wurden noch keine geeigneten Maßnahmen zur Verminderung der Emission von Terpenen beschrieben. Terpene sind dabei gerade die VOCs, die die anfänglichen Emissionen aus Holzwerkstoffen in der Produktion und bei der Nutzung bestimmen.

Es besteht also nach wie vor ein Bedarf nach Verfahren, die insbesondere die Emission von Terpenen als Substanzklasse der flüchtigen organischen Verbindungen aber auch von flüchtigen organischen Verbindungen insgesamt aus Holzwerkstoffen verringern, sowie entsprechend erhaltene Holzwerkstoffe.

Es war nun Aufgabe der vorliegenden Erfindung, die Verwendung von Additiven in Verfahren bereit zu stellen, die bereits vorhandene, insbesondere Terpene, aber auch sich neu bildende flüchtige organische Verbindungen (VOC) in weniger toxische Verbindungen umwandelt, um die Emission dieser VOC und insbesondere der Terpene aus Holzwerkstoffen zu reduzieren. Wichtig ist dabei auch, dass keine den Herstellungsprozess der Holzwerkstoffe störende Substanzen verwendet oder generiert werden. Es ist ebenfalls ein wichtiger Aspekt, dass die Herstellungskosten der Holzwerkstoffe nicht signifikant erhöht werden. Die eingesetzten Mittel dürfen daher nicht toxisch oder karzinogen werden, sollen aber möglichst umfangreich mit der heterogenen Klasse der flüchtigen organischen Substanzen, insbesondere den Terpenen, reagieren.

### Beschreibung der Erfindung

Die Aufgabe wird dadurch gelöst, dass sowohl ein Oxidationsmittel als auch ein Reduktionsmittel zeitlich getrennt den Lignocellulose-haltigen Zerkleinerungsprodukten zugesetzt wird, um in einem ersten Schritt flüchtige organische Verbindungen zu oxidieren und in einem zweiten Schritt flüchtige organische Verbindungen zu reduzieren.

Dieses zeitlich versetzte Zusetzen von Oxidationsmitteln und Reduktionsmitteln erlaubt, die Emission flüchtiger organischer Verbindungen und insbesondere von Terpenen neben gesättigten oder ungesättigten Aldehyden zu verringern.

Überraschenderweise erlaubt die erfindungsgemäße Verwendung in entsprechenden Verfahren - der Einsatz von einem ersten Additiv I mit oxidierender Wirkung und zeitlich anschließend, der Einsatz von einem zweiten Additiv II mit reduzierender Wirkung - sowohl die anfängliche Emission als auch die Langzeitemission von VOC und insbesondere der Terpene zu reduzieren.

Die durch die Oxidation und anschließender Reduktion entstehenden Verbindungen sind derart, dass sie entweder nicht mehr flüchtig sind oder bei Umsetzung sofort emittieren und somit nicht mehr zu den VOC-Emissionen und insbesondere den Terpen-Emissionen aber auch den Aldehyd-Emissionen beitragen, beziehungsweise die Toxität der entstehenden Verbindungen ist deutlich reduziert.

Die erfindungsgemäße Verwendung in einem solchen Verfahren zeichnet sich dadurch aus, dass den Lignocellulose-haltigen Zerkleinerungsprodukten, bevorzugt Strands oder Hackschnitzel, ein erstes Additiv I mit oxidierender Wirkung zugesetzt wird. In einem zeitlich hiervon nachfolgendem Schritt wird ein zweites Additiv II, das reduzierende Eigenschaften besitzt, den mit Additiv I behandelten Lignocellulose-haltigen Zerkleinerungsprodukten zugesetzt, wie in den Ansprüchen definiert.

Die erfindungsgemäße Verwendung in einem solchen Verfahren ist damit in einem Verfahren zur Herstellung von Holzwerkstoffen aus Lignocellulose-haltigen Zerkleinerungsprodukten umfassend die Schritte:
a) Bereitstellung von Lignocellulose-haltigen Zerkleinerungsprodukten,
b) Zusatz eines ersten Additivs I mit oxidierender Wirkung zu den Zerkleinerungsprodukten,
c) Ermöglichen des Umsetzens des ersten Additivs I mit oxidierender Wirkung mit Inhaltsstoffen der Zerkleinerungsprodukte,
d) Zugabe eines zweiten Additivs II mit reduzierender Wirkung und anschließendes Umsetzen von Inhaltsstoffen der Zerkleinerungsprodukte mit diesen zweiten Additiv II,
e) Verpressen der so behandelten Lignocellulose-haltigen Zerkleinerungsprodukte mit Klebstoffen unter Wärmebehandlung.

Zwischen der Zugabe des ersten Additivs I und des zweiten Additivs II liegt ein Trocknungsschritt. Das heißt, das Additiv I wird insbesondere vor dem Trocknen der Strands oder Hackschnitzel zugefügt, zum Beispiel im Falle der Strands oder Späne vor dem Naßspanbunker, im Ausfallschacht des Naßspanbunkers oder bei Hackschnitzeln als Basis für Faserplatten vor dem Einlauf des Vorkochers, des Kochers oder Refiners, oder bei bereits zerfaserten Holzschnitzen vor dem Trockner.

Insbesondere bevorzugt wird das erste Additiv I somit vor dem Zerfasern hinzugefügt.

Die Zugabe des zweiten Additivs II erfolgt zeitlich nach Zugabe des ersten Additivs I. Die Zugabe des zweiten Additivs II erfolgt insbesondere nach Zerfasern und/oder Trocknen der Lignocellulose-haltigen Zerkleinerungsprodukte aber vor dem Verpressen. Sowohl das Additiv I als auch das Additiv II können in fester oder flüssiger Form den Zerkleinerungsprodukten zugefügt werden. Das zweite Additiv II kann dabei sowohl vor Zugabe des Klebstoffes als auch nach Zugabe des Klebstoffes zugesetzt werden.

Im Allgemeinen handelt es sich bei dem ersten Additiv I um ein Oxidationsmittel, das insbesondere die Substanzgruppe der Terpene in den flüchtigen organischen Verbindungen oxidiert, zum Beispiel zu Aldehyden. Bevorzugte Oxidationsmittel umfassen bekannte in der Holzwerkstoffherstellung verwendete Oxidationsmittel. Insbesondere können die Oxidationsmittel Wasserstoffperoxid ggf. in Kombination mit einem Fe (II) Salz, Ammoniumpersulfat, Cytochrom P450 Monooxygenasen oder Ammoniumperoxid sein.

Natürlich können auch andere bekannte Oxidationsmittel wie sie aus der Literatur bekannt sind, eingesetzt werden.

Das erste Additiv I wird dabei in einem Bereich von 0,1 bis 10 Gew.-% bezogen auf atro Lignocellulose hinzugefügt, bevorzugt in einer Menge von 0,1 bis 5 Gew.-% bezogen auf atro Lignocellulose, wie 0,2 bis 3 Gew.-%, z.B. 0,5 bis 2 Gew.-%.

Das Aufbringen des Additivs auf die Zerkleinerungsprodukte kann gemäß üblichen Verfahren erfolgen, wie Aufsprühen, Aufstreuen. Das erste Additiv I wirkt in der Weise, dass es die Terpene zum Teil unter Ringöffnung partiell oxidiert. Bei dieser Oxidation entstehen unter anderem ungesättigte oder gesättigte Aldehyde bzw. in Abhängigkeit von den Oxidationsbedingungen und den Mengen an Oxidationsmittel Carbonsäuren. Zum Beispiel werden Terpenaldehyde, wie Citral oder Citronellal hergestellt. Zum Beispiel erhält man aus dem von alpha-Pinen die Pinonsäure oder Pinonaldehyd und Pinsäure. Den Grad der Oxidation hängt von der Menge an Oxidationsmitteln und den eingesetzten Oxidationsmitteln selbst ab. Bei großen Überschüssen an Oxidationsmittel sind weitergehende Oxidationsschritte bis zu Säuren oder noch weiter möglich, so dass kleinere sehr leicht flüchtige Verbindungen erzeugt werden, wie Aceton oder CO₂. Allerdings ist hier der ökonomische Aspekt zu berücksichtigen, da eine große Menge an Oxidationsmittel die Herstellungskosten wesentlich in die Höhe treiben würde. Entsprechend ist es ausreichend, die Oxidation bis zur Stufe der Aldehyde oder bevorzugter bis zur Carbonsäure durchzuführen, da diese durch andere Mittel einfach abbaubar und die eingesetzte Menge an Oxidationsmittel dabei möglichst gering und somit auch die Kosten möglichst gering gehalten werden können. Des Weiteren können die durch die radikalische Oxidation aus Terpenen während der Oxidation entstehenden reaktiven Zwischenprodukte (üblicherweise Radikale) auch mit Lignin und Cellulose und Hemicellulose reagieren. Diese Umsetzungsprodukte tragen dann ebenfalls nicht mehr zur Emission bei.

Wie genannt, werden die mit Additiv I behandelten Zerkleinerungsprodukte zeitlich daran anschließend mit dem zweiten Additiv II versetzt. Der zeitliche Abstand hierbei sollte zumindest so gewählt sein, dass eine Umsetzung der Terpene mit dem Oxidationsmittel ermöglicht wird. Dieser Zeitraum ist abhängig vom Zerkleinerungsprodukt und den verwendeten Mengen an Oxidationsmittel. Die Zeit sollte bevorzugt mindestens fünf Minuten, wie mindestens 15 Minuten, zum Beispiel 20 Minuten zwischen Zusatz des Additivs I und des Additivs II betragen. Wie ausgeführt liegt ein Trocknungsschritt zwischen dem Zusatz des ersten Additivs I und des zweiten Additivs II. Bevorzugt findet der Zerfaserungsschritt bei Hackschnitzeln zwischen dem Zusatz des ersten Additivs I und dem zweiten Additiv II statt. Die Beleimung mit üblichen Klebstoffen kann vor oder nach Zugabe des zweiten Additivs II nach Zerfaserung oder Zerspanen der Lignocellulose-haltigen Zerkleinerungsprodukte erfolgen. Als Klebstoffe können übliche Klebstoffe eingesetzt werden, wie Klebstoffe auf Phenol-Formaldehyd-Basis (PF-Klebstoff), ein Klebstoff auf Basis von Isocyanaten (PMDI), ein Harnstoff-Formaldehyd-Klebstoff (UF-Klebstoff), ein Melamin-Harnstoff-Formaldehyd-Klebstoff (MUF-Klebstoff), ein Melamin-Harnstoff-Phenol-Formaldehyd-Klebstoff (MUPF-Klebstoff), ein Tannin-Formaldehyd-Klebstoff (TF-Klebstoff) oder ein Gemisch hiervon.

Das zweite Additiv II ist ein Reduktionsmittel und wird bevorzugt ausgewählt aus der Gruppe bestehend aus Salzen der dithionigen Säure M2SO4, wobei M für ein Metall oder für Ammonium steht, Formamidinsulfinsäure, einer Kombination von jeweils mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindungen, insbesondere Aminosäure(n) enthaltende Verbindungen und Proteine.

Erfindungsgemäß können auch andere bekannte und in der Holzwerkstoffindustrie eingesetzte Reduktionsmittel verwendet werden, wie Hydrogensulfitsalz und Sulfitsalz alleine aber auch Klebstoffe mit Zusatz von proteinhaltigen Verbindungen enthaltend Aminogruppen, wie glutenhaltige Verbindungen, insbesondere Hautleim, Knochenleim, Lederleim; milchproteinhaltige Verbindungen, wie kaseinhaltige Verbindungen; pflanzenproteinhaltige Verbindungen, wie sojahaltige Verbindungen aber auch Mischungen dieser einzelnen Arten.

Dem Fachmann sind geeignete Reduktionsmittel wohl bekannt.

Bevorzugt wird das zweite Additiv II in Mengen 0,1 Gew.-% bis 3 Gew.-% Feststoff bezogen auf atro Lignocellulose hinzugefügt, wie 0,2 bis 2 Gew.-%.

Das zweite Additiv II ermöglicht die Reduktion der Emission von insbesondere der Substanzklasse der Aldehyde der VOC. Das heißt die reduzierenden Additive erlauben insbesondere sowohl gesättigte als auch ungesättigte Aldeyhde zu reduzieren. Zum Beispiel kann das Additiv in Lösung oder als Pulver auf die Strands oder Fasern aufgebracht werden, wobei bei getrockneten Strands oder Fasern der Einsatz von wässrigen Lösungen bevorzugt ist. Die Beleimung der Strands oder Fasern kann sowohl vor als auch nach Auftragen des Additivs erfolgen. Das Aufbringen kann zum Beispiel durch Besprühen, das ein gutes Benetzen erlaubt, erfolgen. Da die Oberfläche aber in nicht unerheblicher Menge zu den Gesamtemissionen beiträgt, besteht auch die Möglichkeit auf die bereits vorgestreuten Strandkuchen vor der Presse die Additive aufzudüsen. Das heißt die Zugabe des Additivs II gemäß dem erfindungsgemäßen Verfahren erfolgt zweckmäßiger Weise über betriebsübliche Anlagen zur Klebstoffdosierung, wie Beleimtrommel, Blow-Line Beleimung Blas-Rohr-Beleimung oder Trockenbeleimung. Bei Fasern bietet sich die Verwendung von Lösungen der Additive II in der Blow-Line an.

Das zweite Additiv II fängt somit nicht nur die bereits in den Lignocellulose-haltigen Zerkleinerungsprodukten vorliegenden gesättigten und ungesättigten flüchtigen Aldehyde sowie die organischen Säuren ab, sondern auch die nach Oxidation der Terpene erhaltenen Oxidationsprodukte, wie Aldehyde, Ketone. Durch die erfindungsgemäße Kombination von zuerst einem Oxidationsmittel und zeitlich daran anschließend einem Reduktionsmittel, ist es möglich die flüchtigen organischen Verbindungen, die aus den Lignocellulose-haltigen Zerkleinerungsprodukten emitiert werden, zu reduzieren. Diese Reduktion der Emission ist sowohl für die anfängliche als auch für die Langzeitemission möglich.

Nach Applikation des zweiten Additivs II und des Klebstoff erfolgt eine Behandlung der Lignocellulose-haltigen Zerkleinerungsprodukte derart, dass dem System ausreichend Energie, zum Beispiel durch Wärme, zugeführt wird, dass eine Umsetzung der VOC und gesättigten und ungesättigten Aldehyde mit dem zweiten Additiv II erfolgt. Diese Behandlung kann zum Beispiel das Heißverpressen der Zerkleinerungsprodukte sein, um die Werkstoffe zu erhalten, insbesondere Platten von Holzwerkstoffen, wie Spanplatten aus Holzspänen, OSB-Platten aus Holzstrands und Holzfaserplatten, insbesondere MDF-Platten, aus Holzfasern.

Bei Lignocellulose-haltigen Zerkleinerungsprodukten handelt es sich bevorzugt um Holzspäne, Strands oder Holzfasern, insbesondere um entsprechende Produkte von Nadelhölzern.

In einem weiteren Aspekt betrifft die vorliegende Erfindung Holzwerkstoffe erhältlich gemäß dem erfindungsgemäßen Verfahren. Bei diesen Holzwerkstoffen handelt es sich insbesondere um Faserplatten, bevorzugt MDF-Platten, Spanplatten oder OSB-Platten. Diese Holzwerkstoffe zeichnen sich durch eine Reduktion der Emission von flüchtigen organischen Verbindungen, insbesondere Terpenen aber auch gesättigten und ungesättigten Aldehyden, aus. Diese Emissionsreduktion ist lang anhaltend und gewährleistet auch eine verringerte Belastung der Umwelt bei Gebrauch der Holzwerkstoffe.

In einem weiteren Aspekt richtet sich die vorliegende Erfindung auf ein Behandlungsmittel zur Reduktion von flüchtigen organischen Verbindungen aus Holzwerkstoffen. Dieses Behandlungsmittel umfasst eine Kombination eines Oxidationsmittels und eines Reduktionsmittels in separaten Gefäßen. Bei den Oxidationsmittel und Reduktionsmittel handelt es sich bevorzugt um die hierin genannten Oxidations- und Reduktionsmittel.

In der Figur 1 wird die erfindungsgemäße Verwendung in einem Verfahren noch einmal schematisch dargestellt. In dem dargestellten Flussdiagramm erfolgt zuerst die Partikelherstellung, das heißt das Zerhacken oder Zerspanen des Holzes. Anschließend erfolgt die Zugabe des Additivs I. Diese Zugabe des Additivs I kann im normalen Produktionsablauf zur Herstellung von Holzwerkstoffen, insbesondere von Span- oder Faserplatten, erfolgen. Nach Zusatz des Additivs I kann ein Umsetzen des Additivs mit Terpenen und anderen flüchtigen organischen Verbindungen erfolgen. Daran schließt sich ein Trocknungsschritt des zerspanten oder zerhackten mit Additiv I behandelten Holzes an. Nach Trocknung erfolgt die Zugabe des Additivs II mit reduzierenden Eigenschaften. Auch die Zugabe des Additivs II kann in dem normalen Produktionsablauf zur Herstellung der Holzwerkstoffe eingegliedert sein, zum Beispiel im Blasrohr oder anderer üblicher Beleimeinrichtungen, wie der Blow-Line. Die Zugabe von Additiv II kann dabei vor oder nach Beleimung der zerspanten oder zerfaserten Zerkleinerungsprodukte erfolgen. Daran anschließend erfolgt das Heißpressen der gelegten oder gestreuten Strand oder Fasergruben, um die Holzwerkstoffe zu erhalten. Das erfindungsgemäße Verfahren eignet sich insbesondere zur Herstellung von Span- und Faserplatten, wie OSB-Platten, Spanplatten und Faserplatten, wie MDF-Platten.

## Patentansprüche

1. Verwendung eines ersten Additivs I und eines zweiten Additivs II zur Verminderung der Emission von flüchtigen organischen Verbindungen, insbesondere Terpenen, aus Klebstoff enthaltenen Holzwerkstoffen aus Lignocellulose-haltigen Zerkleinerungsprodukten, wobei den bereitgestellten Lignocellulose-haltigen Zerkleinerungsprodukten ein erstes Additiv I zugesetzt wird und Ermöglichen des Umsetzens des ersten Additivs I mit Inhaltsstoffen der Zerkleinerungsprodukte, anschließend Zugabe des zweiten Additiv II und anschließend eine Umsetzung des zweiten Additivs II mit den Inhaltsstoffen der Zerkleinerungsprodukte erfolgt, und wobei zwischen dem Zusetzen des ersten Additivs I und der Zugabe des zweiten Additivs II ein Trockungsschritt durchgeführt wird, und anschließend die Holzwerkstoffe aus Lignocellulose-haltigen Zerkleinerungsprodukten mit Klebstoffen unter Wärmebehandlung verpresst werden, **dadurch gekennzeichnet, dass** das erste Additiv I eines mit oxidierender Wirkung auf Inhaltsstoffe der Zerkleinerungsprodukte und das zweite Additiv II eines mit reduzierender Wirkung auf Inhaltsstoffe Lignocellulose-haltiger Zerkleinerungsprodukte ist.

2. Verwendung nach Anspruch 1, **dadurch gekennzeichnet, dass** die Lignocellulose-haltigen Zerkleinerungsprodukte Strands oder Hackschnitzel sind.

3. Verwendung nach Anspruch 1 oder 2, **dadurch gekennzeichnet, dass** das erste Additiv I derart verwendet wird, dass die Zugabe vor dem Trocknen der Strands oder Hackschnitzel erfolgt.

4. Verwendung nach Anspruch 3, wobei die Zugabe des ersten Additivs vor dem Nassspanbunker, im Ausfallschacht des Nassspanbunkers, im Einlauf des Trockners, im Vorkocher, Kocher oder Refiner in Abhängigkeit von den Lignocellulose-haltigen Zerkleinerungsprodukten erfolgt.

5. Verwendung nach einem der vorherigen Ansprüche, **dadurch gekennzeichnet, dass** das zweite Additiv derart verwendet wird, dass die Zugabe nach Trocknung und Zerfaserung bzw. Zerspanung der mit Additiv I behandelten Strands oder Hackschnitzel erfolgt.

6. Verwendung nach einem der vorherigen Ansprüche, wobei die Zugabe des Additivs II vor oder nach Beleimung der zerfaserten oder zerspanten Lignocellulose-haltigen Zerkleinerungsprodukte erfolgt.

7. Verwendung nach einem der vorherigen Ansprüche, **dadurch gekennzeichnet, dass** das erste Additiv I ein Oxidationsmittel ist, ausgewählt aus der Gruppe eines Fe (II) Salzes in Kombination mit Wasserstoffperoxid, Ammoniumpersulfat, Cytochrom P450 Monooxygenasen und Ammoniumperoxid.

8. Verwendung nach einem der vorherigen Ansprüche, **dadurch gekennzeichnet, dass** das erste Additiv I in einem Bereich von 0,1 bis 10 Gew.-% bezogen auf atro Lignocellulose dem Lignocellulose-haltigen Zerkleinerungsmaterial hinzugefügt wird.

9. Verwendung nach Anspruch 8, wobei das erste Additiv I in einer Menge von 0,1 bis 5 Gew.-% bezogen auf atro Lignocellulose hinzugefügt wird.

10. Verwendung nach einem der vorherigen Ansprüche, wobei das zweite Additiv II ein Reduktionsmittel ist, ausgewählt aus der Gruppe bestehend aus Salzen der dithionigen Säure MS₂O₄, wobei M für ein Metall oder für Ammonium steht, Formamidinsulfinsäure, einer Kombination von mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindung, insbesondere Aminosäure(n) enthaltende Verbindungen und Proteine.

11. Verwendung nach Anspruch 10, wobei das zweite Additiv II in einer Menge von zwischen 0,01 Gew.-% und 3 Gew.-% Feststoff bezogen auf atro Lignocellulose zugegeben wird.

12. Verwendung nach einem der vorherigen Ansprüche, **dadurch gekennzeichnet, dass** die Additive in Kombination mit den folgenden Klebstoffen verwendet werden: ein Phenol-Formaldehyd-Klebstoff, ein Klebstoff auf Basis von Isocyanaten (PMDI), ein Harnstoff-Formaldehyd-Klebstoff, ein Melamin-Harnstoff-Formaldehyd-Klebstoff, ein Melamin-Harnstoff-Phenol-Formaldehyd-Klebstoff, ein Tannin-Formaldehyd-Klebstoff, oder ein Gemisch hiervon ist.

13. Verwendung nach einem der vorherigen Ansprüche, **dadurch gekennzeichnet, dass** das erste Additiv I und/oder das zweite Additiv II in Form eines Feststoffes oder in flüssiger Form aufgebracht wird.

## Claims

1. Use of a first additive I and of a second additive II to reduce the emission of volatile organic compounds, especially terpenes, from adhesive-containing wood-base materials formed out of lignocellulosic comminution products, wherein a first additive I is added to the provided lignocellulosic comminution products and enabling of the reacting of the first additive I with ingredients of the comminution products, then admixing the second additive II and then a reaction of the second additive II with the ingredients of the comminution products is effected, and wherein a drying step is carried out between the addition of the first additive I and the admixture of the second additive II, and then the wood-base materials from lignocellulosic comminution products are press molded with adhesives by heat treatment, **characterized in that** the first additive I is one having an oxidizing effect on ingredients of the comminution products and the second additive II is one having a reducing effect on ingredients of lignocellulosic comminution products.

2. Use according to Claim 1, **characterized in that** the lignocellulosic comminution products are strands or wood chips.

3. Use according to Claim 1 or 2, **characterized in that** the first additive I is used such that the admixture is effected before the step of drying the strands or wood chips.

4. Use according to Claim 3, wherein the admixture of the first additive is effected upstream of the wet chip silo, in the outfall shaft of the wet chip silo, in the inlet to the dryer, in the precooker, cooker or refiner according to the lignocellulosic comminution products.

5. Use according to any preceding claim, **characterized in that** the second additive is used such that the admixture is effected after drying and defibration/chipping of the strands or wood chips which have been treated with additive I.

6. Use according to any preceding claim, wherein the admixture of additive II is effected before or after resination of the defibrated or chipped lignocellulosic comminution products.

7. Use according to any preceding claim, **characterized in that** the first additive I is an oxidizing agent selected from the group of an Fe(II) salt combined with hydrogen peroxide, ammonium persulphate, cytochrome P450 monooxygenases and ammonium peroxide.

8. Use according to any preceding claim, **characterized in that** the first additive I is added to the lignocellulosic comminution material at from 0.1 to 10 wt% based on bonedry lignocellulose.

9. Use according to Claim 8, wherein the first additive I is added at from 0.1 to 5 wt% based on bonedry lignocellulose.

10. Use according to any preceding claim, wherein the second additive II is a reducing agent selected from the group consisting of salts of dithionous acid MS₂O₄, where M is a metal or ammonium, formamidinesulphinic acid, a combination of at least one component from hydrogensulphite salt and sulphite salt with or without further admixture of at least one component from urea- or urea derivatives; compounds with amino-containing compound, especially proteins and compounds comprising amino acid(s).

11. Use according to Claim 10, wherein the second additive II is admixed in an amount of between 0.01 wt% and 3 wt% of solids based on bonedry lignocellulose.

12. Use according to any preceding claim, **characterized in that** the additives are used in combination with the following adhesives: a phenol-formaldehyde adhesive, an adhesive based on isocyanates (PMDI), a urea-formaldehyde adhesive, a melamine-urea-formaldehyde adhesive, a melamine-urea-phenol-formaldehyde adhesive, a tannin-formaldehyde adhesive, or a mixture thereof.

13. Use according to any preceding claim, **characterized in that** the first additive I and/or the second additive II is applied in solid form or in liquid form.

## Revendications

1. Utilisation d'un premier additif I et d'un deuxième additif II pour la réduction de l'émission de composés organiques volatils, notamment de terpènes, à partir de matériaux à base de bois contenant un adhésif constitués de produits de broyage contenant de la lignocellulose, un premier additif I étant ajouté aux produits de broyage contenant de la lignocellulose préparés et le premier additif I étant laissé réagir avec les constituants des produits de broyage, puis un ajout du deuxième additif II ayant lieu, et ensuite une réaction du deuxième additif II avec les constituants des produits de broyage, et une étape de séchage étant réalisée entre l'ajout du premier additif I et l'ajout du deuxième additif II, et les matériaux à base de bois constitués de produits de broyage contenant de la lignocellulose étant ensuite comprimés avec des adhésifs avec traitement thermique, **caractérisée en ce que** le premier additif I est un additif ayant un effet oxydant sur les constituants des produits de broyage et le deuxième additif II est un additif ayant un effet réducteur sur les constituants des produits de broyage contenant de la lignocellulose.

2. Utilisation selon la revendication 1, **caractérisée en ce que** les produits de broyage contenant de la lignocellulose sont des longs copeaux de bois ou des copeaux de bois.

3. Utilisation selon la revendication 1 ou 2, **caractérisée en ce que** le premier additif I est utilisé de sorte que l'ajout ait lieu avant le séchage des longs copeaux de bois ou des copeaux de bois.

4. Utilisation selon la revendication 3, dans laquelle l'ajout du premier additif a lieu avant le silo à copeaux humides, dans le puits de sortie du silo à copeaux humides, dans l'entrée du séchoir, dans le dispositif de pré-cuisson, dans le dispositif de cuisson ou dans le raffineur en fonction des produits de broyage contenant de la lignocellulose.

5. Utilisation selon l'une quelconque des revendications précédentes, **caractérisée en ce que** le deuxième additif est utilisé de sorte que l'ajout ait lieu après le séchage et le défibrage ou le déchiquetage des longs copeaux de bois ou des copeaux de bois traités avec l'additif I.

6. Utilisation selon l'une quelconque des revendications précédentes, dans laquelle l'ajout de l'additif II a lieu avant ou après l'encollage des produits de broyage contenant de la cellulose défibrés ou déchiquetés.

7. Utilisation selon l'une quelconque des revendications précédentes, **caractérisée en ce que** le premier additif I est un oxydant, choisi dans le groupe d'un sel de Fe (II) en combinaison avec du peroxyde d'hydrogène, du persulfate d'ammonium, des monooxygénases de cytochrome P450 et du peroxyde d'ammonium.

8. Utilisation selon l'une quelconque des revendications précédentes, **caractérisée en ce que** le premier additif I est ajouté dans une plage allant de 0,1 à 10 % en poids, par rapport à la lignocellulose sèche du matériau de broyage contenant de la lignocellulose.

9. Utilisation selon la revendication 8, dans laquelle le premier additif I est ajouté en une quantité de 0,1 à 5 % en poids, par rapport à la lignocellulose sèche.

10. Utilisation selon l'une quelconque des revendications précédentes, dans laquelle le deuxième additif II est un réducteur, choisi dans le groupe constitué par les sels de l'acide dithioneux MS₂O₄, M représentant un métal ou l'ammonium, l'acide formamidine-sulfinique, une combinaison d'au moins un composant constitué d'un sel d'hydrogénosulfite et d'un sel de sulfite, éventuellement avec ajout supplémentaire d'au moins un composant constitué d'urée ou de dérivés d'urée ; les composés avec un composé contenant des groupes amino, notamment les composés contenant un ou plusieurs acides aminés et les protéines.

11. Utilisation selon la revendication 10, dans laquelle le deuxième additif II est ajouté en une quantité comprise entre 0,01 % en poids et 3 % en poids de solides par rapport à la lignocellulose sèche.

12. Utilisation selon l'une quelconque des revendications précédentes, **caractérisée en ce que** les additifs sont utilisés en combinaison avec les adhésifs suivants : un adhésif de phénol-formaldéhyde, un adhésif à base d'isocyanates (PMDI), un adhésif d'urée-formaldéhyde, un adhésif de mélamine-urée-formaldéhyde, un adhésif de mélamine-urée-phénol-formaldéhyde, un adhésif de tanin-formaldéhyde, ou un mélange de ceux-ci.

13. Utilisation selon l'une quelconque des revendications précédentes, **caractérisée en ce que** le premier additif I et/ou le deuxième additif II sont appliqués sous la forme d'un solide ou sous forme liquide.
